# EUROPÄISCHE PATENTSCHRIFT

(11) **EP 0 935 549 B1**
(45) Veröffentlichungstag und Bekanntmachung des Hinweises auf die Patenterteilung: **24.07.2002**
(21) Anmeldenummer: 98919040.0
(22) Anmeldetag: 06.03.1998
(51) Int. Cl.: B62D 15/02, G01D 5/16

(54) **VERFAHREN UND VORRICHTUNG ZUR MESSUNG DES WINKELS EINES ERSTEN DREHBAREN KÖRPERS**
METHOD AND DEVICE FOR MEASURING THE ANGLE OF A FIRST ROTATABLE BODY
PROCEDE ET DISPOSITIF POUR MESURER L'ANGLE D'UN PREMIER CORPS ROTATIF

(30) Priorität: 11.09.1997 DE 19739823
(43) Veröffentlichungstag der Anmeldung: 18.08.1999
(73) Patentinhaber: ROBERT BOSCH GMBH, 70442 Stuttgart (DE)
(72) Erfinder: NOLTEMEYER, Ralf, D-73249 Wernau (DE); FUHRMANN, Horst, D-71723 Grossbottwar (DE)
(86) Internationale Anmeldenummer: DE9800661
(87) Internationale Veröffentlichungsnummer: WO9912796

(56) Entgegenhaltungen:
- DE-A- 19 506 938
- DE-A- 19 601 657
- US-A- 5 065 095

## Beschreibung

Die Erfindung betrifft ein Verfahren und eine Vorrichtung zur Messung des Winkels eines ersten drehbaren Körpers, der mit zwei weiteren drehbaren Körpern zusammenwirkt, wobei der Winkel der beiden weiteren Körper gemessen und daraus der Winkel des ersten Körpers ermittelt wird.

Ein derartiges Verfahren bzw. eine derartige Vorrichtung ist aus der deutschen Offenlegungsschrift DE 195 06 938 A1 bekannt. Dort ist als erster drehbarer Körper ein erstes Zahnrad vorgesehen, das mit einer Anzahl Zähne versehen ist und das um mehr als 360° drehbar ist. Die beiden weiteren drehbaren Körper sind ebenfalls Zahnräder, die mit dem ersten Zahnrad in Eingriff sind, und deren Anzahl Zähne kleiner ist als die Anzahl des ersten Zahnrads. Des weiteren unterscheiden sich die Anzahl der Zähne der beiden weiteren Körper beispielsweise um einen Zahn.

Jedem der beiden weiteren Körper ist ein Sensor zugeordnet, mit dem der Winkel des Körpers absolut, also auch bei ruhendem Körper messbar ist. Aus den gemessenen Winkeln der beiden weiteren Körper kann der Winkel des ersten Körpers ermittelt werden.

Die Genauigkeit des ermittelten Winkels des ersten Körpers kann durch eine entsprechende Wahl der Anzahl der Zähne des ersten Körpers und der beiden weiteren Körper beeinflusst werden. Es hat sich jedoch herausgestellt, dass auch nach einer diesbezüglichen Optimierung der ermittelte Winkel des ersten Körpers noch Ungenauigkeiten aufweist.

Aus der US-A-5,065,095 ist ein Winkelsensor bekannt, bei dem ein rotierendes Zahnrad mit Hilfe eines feststehenden Sensors abgetastet wird. Der Sensor weist zwei Sensorelemente auf, die beide jeweils ein Ausgangssignal abgeben. Die beiden Ausgangssignale weisen eine vorgebbare Phasenverschiebung auf. Die beiden Ausgangssignale der Sensorelemente werden vor der Weiterverarbeitung einer Sample-and-Hold-Schaltung zugeführt. In der nachfolgenden Auswerteschaltung wird aus beiden Signalen der zu besrtimmende Winkel ermittelt.

Die DE-A-196 01 657 beschreibt einen Lenkwinkelsensor, der ein Zahnrad umfaßt, das mit der Lenksäule gekoppelt ist und mit Hilfe zweier Sensoren abgetastet wird. Durch gemeinsame Verarbeitung der beiden Ausgangssignale der Sensoren wird der Lenkwinkel in einer nachfolgenden Auswerteschaltung bestimmt. Das Prinzip der Auswertung besteht darin, den Lenkwinkel nicht nur durch markante Zustände der Sensoramplituden oder deren Änderungen zu bestimmen, sondern die Ausgangswerte der Sensorsignale mit gleichbleibender Frequenz abzutasten. Dadurch wird eine unterschiedliche Auflösung erhalten, die bei langsamer Drehung des Lenkrades größer ist als bei einer schnellen Drehung. Damit läßt sich eine genaue Winkelbestimmung auch bei langsamen Drehungen erzielen.

Davon ausgehend ist es die Aufgabe der Erfindung, ein Verfahren und eine Vorrichtung der eingangs genannten Art derart weiterzubilden, dass eine exakte Ermittlung des Winkels des ersten drehbaren Körpers möglich ist.

Diese Aufgabe wird bei einem Verfahren und einer Vorrichtung der eingangs genannten Art erfindungsgemäß dadurch gelöst, dass der Winkel der beiden weiteren Körper gleichzeitig gemessen wird, wobei die Winkel der beiden weiteren Körper mit einen gemeinsamen Zeitbezug gemessen werden und die gemessenen winkel der beiden weiteren Körper unter Verwendung von Sample-and - Hold - Gliedern gespeichert werden.

Durch die gleichzeitige Messung wird sichergestellt, dass auch dann, wenn die Winkel der beiden weiteren Körper während einer Drehung der Körper gemessen werden, eine exakte Ermittlung des Winkels des ersten Körpers möglich ist. Würden die Winkel der beiden weiteren Körper nicht gleichzeitig gemessen werden, so könnte dies insbesondere bei einer Drehung der Körper zur Folge haben, dass sich der später vermessene Körper sich bereits um ein geringfügiges Delta weitergedreht hat. Dieses Delta ist ansich sehr klein, kann jedoch trotzdem dazu führen, dass in der nachfolgenden Ermittlung des Winkels des ersten Körpers die erforderliche Genauigkeit nicht mehr erreicht werden kann. Dies wird durch die gleichzeitige Messung der Winkel der beiden weiteren Körper sicher vermieden. Die Messung der Winkel der beiden weiteren Körper wird also synchronisiert, mit dem wesentlichen Vorteil, dass dadurch die Genauigkeit der Ermittlung des Winkels des ersten Körpers verbessert wird.

Aufgrund der Synchronisierung werden die Winkel der beiden anderen Körper zu einem gleichen Abtastzeitpunkt, d.h. gleichzeitig gemessen. Die Synchronisierung bzw. die Festlegung des gleichen Abtastzeitpunktes, und somit die gleichzeitige Messung, erreicht man mit Hilfe eines Signals, mit dem die Messung der beiden Winkel gestartet wird.

Die gemessenen Winkel der beiden weiteren Körper werden gespeichert. Auf diese Weise wird erreicht, dass die Ermittlung des Winkels des ersten drehbaren Körpers von der Messung der Winkel der beiden weiteren Körper unabhängig ist. Es ist also nicht erforderlich, die gemessenen Winkel der beiden weiteren Körper unmittelbar weiterzuverarbeiten, sondern es wird durch die Speicherung der gemessenen Winkel möglich, diese gemessenen Winkel unabhängig vom Zeitpunkt der Messung zu verarbeiten.

Besonders zweckmäßig ist es, wenn jeder der beiden weiteren Körper mit einem Magneten versehen ist, dem ein AMR-Sensor zugeordnet ist, der zur Messung des Winkels des zugehörigen weiteren Körpers vorgesehen ist, und wenn eine Auswerteschaltung vorgesehen ist, die mit den beiden AMR-Sensoren gekoppelt ist, und die zur Auswertung und ggf. zur Umformung der gemessenen Winkel der beiden weiteren Körper vorgesehen ist. Die genannten AMR-Sensoren sind dazu geeignet, die Winkel der beiden weiteren Körper absolut zu messen. Die Winkel können also gemessen werden, ohne dass es hierzu erforderlich wäre, die beiden Körper in eine Drehung zu versetzen. Die den beiden AMR-Sensoren zugeordnete Auswerteschaltung ist dazu vorgesehen, die gemessenen Winkel in einem ersten Schritt weiterzuverarbeiten. Insbesondere ist es möglich, dass die Auswerteschaltung die gemessenen Winkel beispielsweise im impulslängenmodulierte oder in sonstige digitale Signale umformt.

Besonders zweckmäßig ist es, wenn zur Ermittlung des Winkels des ersten Körpers ein Rechengerät, insbesondere ein programmierbarer Microprozessor, vorgesehen ist. Damit ist es auf besonders einfache Weise möglich, die Ermittlung des Winkels des ersten Körpers beispielsweise an die Geometrie der beiden weiteren Körper anzupassen. Dabei ist es nur erforderlich, die entsprechenden Werte in dem Programm des Mikroprozessors zu verändern.

Bei einer vorteilhaften Ausgestaltung der Erfindung kann das Rechengerät ein Startsignal erzeugen, mit dem die gleichzeitige Messung der Winkel der beiden weiteren Körper durch die beiden AMR-Sensoren auslösbar ist. Das Rechengerät ist also für die gleichzeitige Messung der Winkel der beiden weiteren Körper verantwortlich. Das Rechengerät löst dabei diese gleichzeitige Messung dadurch aus, dass es ein einziges Startsignal erzeugt, mit dem bei beiden AMR-Sensoren die Messungen hervorgerufen werden. Dies stellt eine sichere, aber trotzdem sehr einfache Möglichkeit dar, die gleichzeitige Messung der Winkel der beiden weiteren Körper zu realisieren.

Durch dieses gemeinsame Startsignal erreicht man, dass die Winkel der beiden weiteren Körper zu einem gleichen Abtastzeitpunkt, d.h. gleichzeitig gemessen werden. Der gleiche Abtastzeitpunkt wird durch das Startsignal definiert bzw. vorgegeben.

Bei einer vorteilhaften Weiterbildung der Erfindung ist eine Leitung vorgesehen, über die das Rechengerät mit der Auswerteschaltung verbunden ist, und auf der das Startsignal der Auswerteschaltung zuführbar ist. Mit Hilfe dieser Leitung wird die Auswerteschaltung mit dem Startsignal beaufschlagt.

Weitere Merkmale, Anwendungsmöglichkeiten und Vorteile der Erfindung ergeben sich aus der nachfolgenden Beschreibung und Ausführungsbeispielen der Erfindung, die in den Figuren der Zeichnung dargestellt sind.
- Figur 1: zeigt eine schematische Darstellung eines Ausführungsbeispiels einer erfindungsgemäßen Vorrichtung zur Ermittlung des Winkels eines ersten drehbaren Körpers,
- Figur 2: zeigt ein schematisches Blockschaltbild einer elektrischen Schaltung für die Vorrichtung der Figur 1 und
- Figur 3: zeigt ein schematisches Diagramm zweier in der Schaltung der Figur 2 auftretender Signale.

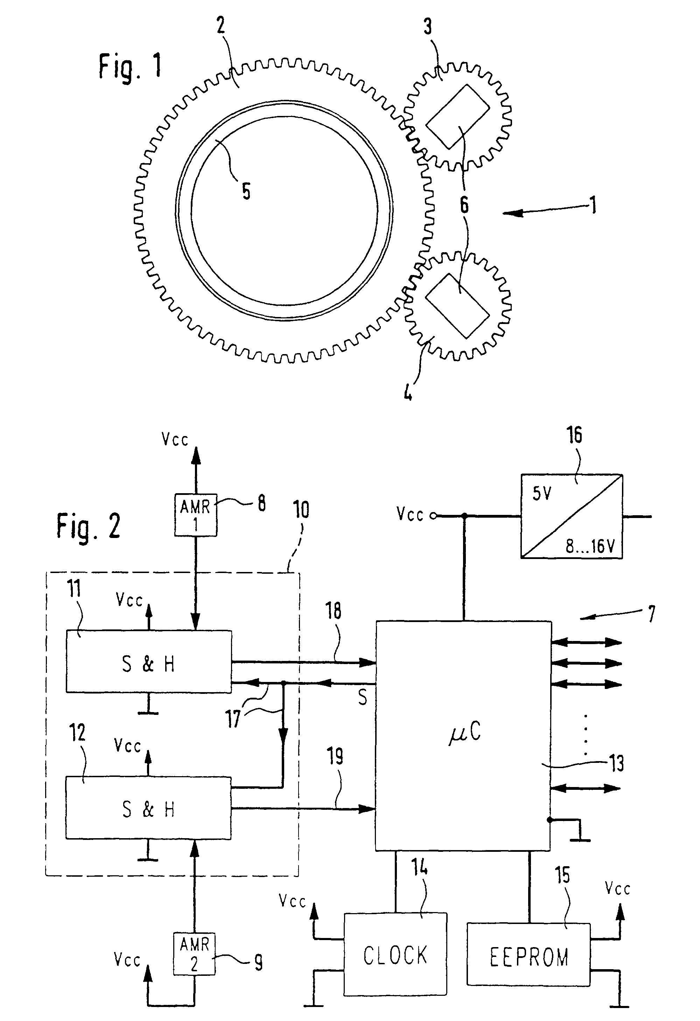

In der Figur 1 ist eine Vorrichtung 1 dargestellt, die einen ersten drehbaren Körper sowie zwei weitere drehbare Körper aufweist. Als erster drehbarer Körper ist ein Zahnrad 2 vorgesehen, das eine Anzahl von n Zähnen aufweist. Die beiden weiteren drehbaren Körper sind ebenfalls als Zahnräder 3, 4 ausgebildet, wobei das Zahnrad 3 eine Anzahl von m Zähnen und das Zahnrad 4 eine Anzahl von m+1 Zähnen aufweist.

Das Zahnrad 2 ist beispielsweise mit einem Lenkrad eines Kraftfahrzeugs gekoppelt. Insbesondere ist das Zahnrad 2 auf einer Achse 5 aufgebracht, die ein Bestandteil des genannten Lenkrads darstellt.

Jedes der beiden Zahnräder 3, 4 ist mit einem Magneten 6 versehen, wobei jeder der Magnete 6 ein in einer bestimmten Richtung ausgerichtetes Magnetfeld erzeugt.

Die beiden Zahnräder 3, 4 und das Zahnrad 2 befinden sich in Eingriff, so dass eine Drehung des Zahnrads 2 entsprechende Drehungen der Zahnräder 3, 4 bewirkt. Aufgrund der unterschiedlichen Anzahl Zähne der Zahnräder 2, 3, 4 sind die Drehwinkel der Zahnräder 2, 3, 4 bei einer Drehung unterschiedlich.

Der Drehwinkel des Zahnrads 2 kann kleiner als 360° sein. Insbesonder bei der Verwendung der Vorrichtung 1 bei einem Lenkrad eines Kraftfahrzeugs kann das Zahnrad 2 mehrere Drehungen ausführen. Insbesondere beträgt der Drehwinkel des Zahnrads 2 zum Beispiel 1440°. Die Drehwinkel der beiden Zahnräder 3, 4 sind vorzugsweise nicht begrenzt.

In der Figur 2 ist eine Schaltung 7 dargestellt, die der Vorrichtung 1 der Figur 1 zugeordnet ist. Die Schaltung 7 der Figur 2 weist zwei sogenannte AMR-Sonsoren 8, 9 auf, bei denen es sich um Elemente mit einem veränderlichen Widerstand handelt (AMR = anisitroper magnetischer Widerstand). AMR-Sensoren sind Sensoren, die ihren Widerstandswert abhängig davon ändern, wie der Sensor in einem externen magnetischen Feld ausgerichtet ist. Folglich eignen sich AMR-Sensoren zur Erfassung des Drehwinkels von Körpern, an denen beispielsweise ein Magnet befestigt ist. Die beiden AMR-Sensoren 8, 9 sind mit einer Auswerteschaltung 10 verbunden, die aus zwei Blöcken 11, 12 zusammengesetzt ist. Dabei beaufschlagt der erste AMR-Sensor 8 den Block 11 und der zweite AMR-Sensor 9 den Block 12. Die Auswerteschaltung 10 ist mit einem Rechengerät 13, insbesondere einem Mikroprozessor verbunden. An das Rechengerät 13 ist eine Takterzeugung 14 sowie ein Speicher 15 angeschlossen. Von einer Spannungsversorgung 16 wird eine Versorgungsspannung V_{cc} erzeugt, mit der das Rechengerät 13, die Takterzeugung 14, der Speicher 15, die beiden Blöcke 11, 12 der Auswerteschaltung 10, sowie die beiden AMR-Sensoren 8, 9 versorgt werden. Bei Verwendung der Schaltung in einem Kraftfahrzeug, wird die genannte Versorgungsspannung V_{cc} aus der Batteriespannung des Kraftfahrzeugs erzeugt.

Über eine Mehrzahl weiterer Leitungen ist das Rechengerät mit sonstigen Einrichtungen verbunden. Bei der Verwendung der Schaltung 7 in einem Kraftfahrzeug ist das Rechengerät 13 über die genannten Leitungen insbesondere mit einem Steuergerät zur Steuerung und/oder Regelung der Funktionen des Kraftfahrzeugs verbunden.

Die beiden AMR-Sensoren 8, 9 sind den beiden Magneten 6 der beiden Zahnräder 3, 4 zugeordnet. Jeder der Magnete 6 erzeugt in dem zugehörigen ortsfesten AMR-Sensor 8, 9 eine Spannung, die vom Winkel des zugehörigen Zahnrads 3, 4 abhängig ist. Bei einer Drehung des jeweiligen Zahnrads 3, 4 entsteht ein Spannungsverlauf der über einen Winkel von etwa 180° ansteigt, um danach über einen Winkel von etwa 180° wieder abzufallen. Nach einer Umdrehung des Zahnrads 3, 4, also nach 360° widerholt sich dieser Spannungsverlauf.

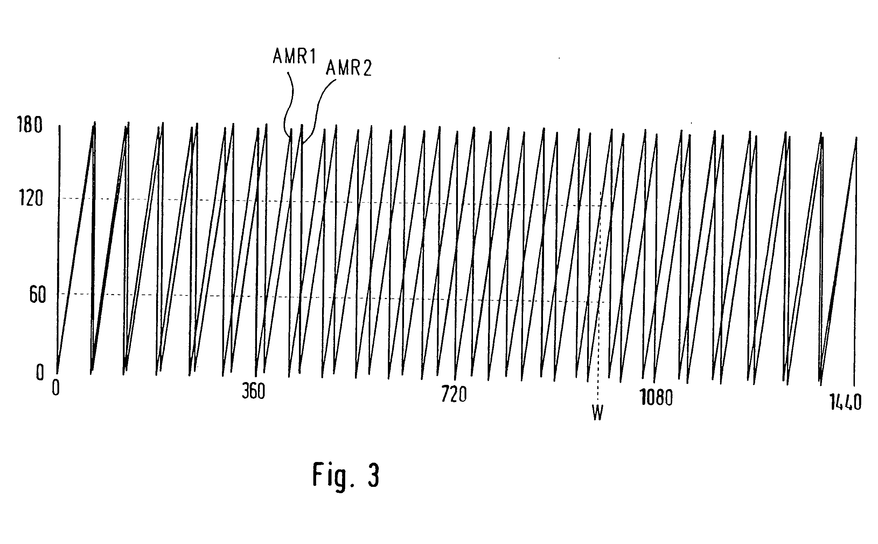

In der Figur 3 ist der Spannungsverlauf dargestellt, der von den beiden AMR-Sensoren 8, 9 erzeugt wird, wenn sich die Zahnräder 3, 4 drehen. Auf der horizontalen Achse ist dabei die Drehung des Zahnrads 2 aufgetragen, die sich in einem Bereich von 0° bis 1.440° erstreckt. Eine derartige Drehung des Zahnrads 2 bewirkt eine Vielzahl von Drehungen der Zahnräder 3, 4. Diese Vielzahl der Drehungen der Zahnräder 3, 4 hat widerum zur Folge, dass sich die von den beiden AMR-Sensoren 8, 9 erzeugten Spannungen verändern. Dies ist auf der horizontalen Achse des Diagramms der Figur 3 aufgetragen. Dabei bedeutet ein Anstieg des Spannungsverlaufs eine Drehung des zugehörigen Zahnrads 3, 4 um 180°.

Aufgrund der unterschiedlichen Anzahl Zähne der Zahnräder 3, 4 ergeben sich unterschiedliche Spannungsverläufe bei den beiden AMR-Sensoren 8, 9. Wie dies in der Figur 3 dargestellt ist, ist die Spannung der beiden AMR-Sensoren 8, 9 bei einem Winkel von 0° des Zahnrads 2 ebenfalls 0°. Wird nun das Zahnrad 2 gedreht, so steigt die Spannung der beiden AMR-Sensoren 8, 9 an. Aufgrund der unterschiedlichen Anzahl Zähne der beiden Zahnräder 3, 4 ist dieser Anstieg unterschiedlich steil. Dies hat zur Folge, dass die beiden von den AMR-Sensoren 8, 9 erzeugten Spannungsverläufe nicht identisch sind. Dies ist aus der Figur 3 insbesondere bei etwas größeren Winkeln des Zahnrads 2 zu erkennen, bei denen die beiden Spannungsverläufe der AMR-Sensoren 8, 9 wesentlich voneinander abweichen.

In Betrieb der Vorrichtung 1 und der Schaltung 7 wird die Spannung der beiden AMR-Sensoren 8, 9 gemessen. Diese Spannung ist gleichbedeutend mit den Winkeln der beiden Zahnräder 3, 4.
Aus diesen beiden gemessenen Winkeln der Zahnräder 3 und 4 und insbesondere aus der Differenz der beiden genannten Winkel kann auf dem Winkel des Zahnrads 2 geschlossen werden. In diese Berechnung des Winkels des Zahnrads 2 gehen dabei die Anzahlen n, m und m+1 der Zahnräder 2, 3 und 4 ein. Beispielhaft ist in der Figur 3 der beschriebene Zusammenhang für einen Winkel W eingezeichnet.

Wie aus der Figur 2 hervorgeht, ist eine Leitung 17 vorgesehen, mit der das Rechengerät 13 mit jedem der beiden Blöcke 11, 12, und damit mit der Auswerteschaltung 10 verbunden ist. Auf der Leitung 17 ist ein Startsignal S der Auswerteschaltung 10 und insbesondere den beiden Blöcken 11, 12 zuführbar, mit dem eine gleichzeitige Messung der Winkel der beiden Zahnräder 3, 4 erreichbar ist. Diese gleichzeitig gemessenen Winkel der beiden Zahnräder 3, 4 werden dann gespeichert.

Zu diesem Zweck ist in den beiden Blöcken 11, 12 insbesondere jeweils ein Sample-and-Hold-Glied enthalten, das mit dem jeweils zugehörigen AMR-Sensor 8, 9 verbunden ist. Des Weiteren ist das Sample-and-Hold-Glied von dem Startsignal S beaufschlagt.

Erzeugt nun das Rechengerät 13 das Startsignal S, indem es beispielsweise auf der Leitung 17 ein binäres Signal von einem niederen auf ein hohes Potential überführt, so hat dies zur Folge, dass die beiden Sample-and-Hold-Glieder in den beiden Blöcken 11 und 12 gleichzeitig die von den beiden AMR-Sensoren 8, 9 gelieferten Spannungen einlesen und speichern. Dies bedeutet, dass die von den beiden AMR-Sensoren gemessenen Winkel der beiden Zahnräder 3, 4 synchron in den Sample-and-Hold-Gliedern gespeichert werden.

Danach ist es möglich, dass das Rechengerät mit Hilfe weiterer Ansteuersignale die gespeicherten Winkel der beiden Zahnräder 3, 4 aus dem Sample-and-Hold-Gliedern der beiden Blöcke 11, 12 ausliest und über entsprechenden Leitungen 18, 19 in das Rechengerät 13 zur weiteren Verarbeitung einliest.

Mit Hilfe des auf der Leitung 17 vorhandenen Startsignal S erfolgt somit eine Synchronisierung der beiden Blöcke 11, 12 und damit letztlich eine Synchronisierung der Messung der Winkel der beiden Zahnräder 3, 4. Damit ist der gleiche Zeitbezug für die Messung der Winkel der beiden Zahnräder 3, 4 gewährleistet. Dies hat zur Folge, dass bei der nachfolgenden Berechnung des Winkels des Zahnrads 2 aufgrund des genannten gleichen Zeitbezugs eine höhere Genauigkeit erreichbar ist.

Der gleiche Zeitbezug für die Messung der Winkel der beiden Zahnräder 3 bzw. 4 wird mit Hilfe des Startsignals S realisiert. Durch den bereits oben angesprochenen Übergang im Startsignal S von einem niederen auf ein höheres Potential wird der Abtastzeitpunkt, und somit der gleiche Zeitbezug, für die Messung besagter Winkel festgelegt bzw. definiert. Ausgehend von dem Startsignal S wird ein gemeinsamer Zeitbezug geschaffen, der zu einer Synchronisierung der Messung der beiden Winkel und somit zu einer gleichzeitigen Messung, d.h. zu einer Messung der beiden Winkel zu einem Abtastzeitpunkt führt. Dabei ist es durchaus denkbar, dass der Abtastzeitpunkt mit einem von der Takterzeugung 14 erzeugten Zeitpunkt identisch ist.

## Patentansprüche

1. Verfahren zur Ermittlung des Winkels eines ersten drehbaren Körpers, der mit zwei weiteren drehbaren Körpern zusammenwirkt, wobei der Winkel der beiden weiteren Körper gemessen und daraus der Winkel des ersten Körpers berechnet wird, **dadurch gekennzeichnet, dass** der Winkel der beiden weiteren Körper (3), (4) gleichzeitig gemessen wird, wobei die Winkel der beiden weiteren Körper (3), (4) mit einem gemeinsamen Zeitbezug, insbesondere zu einem gleichen Abtastzeitpunkt, gemessen werden und die gemessenen Winkel der beiden weiteren Körper (3), (4) unter Verwendung von Sample-and-Hold-Gliedern (11), (12) gespeichert werden.

2. Vorrichtung (1, 7) zur Ermittlung des Winkels eines ersten drehbaren Körpers, der mit zwei weiteren drehbaren Körpern zusammenwirkt, wobei der Winkel der beiden weiteren Körper meßbar und daraus der Winkel des ersten Körpers berechenbar ist, **dadurch gekennzeichnet, dass** Mittel vorgesehen sind zur gleichzeitigen Messung der Winkel der beiden weiteren Körper (3), (4) mit gemeinsamem Zeitbezug, insbesondere mit gleichem Abtastzeitpunkt und mit Speichermitteln, die Sample-and-Hold-Glieder (11), (12) umfassen, zur Speicherung der gemessenen Winkel der beiden weiteren Körper (3), (4).

3. Vorrichtung (1, 7) nach Anspruch 2, **dadurch gekennzeichnet, dass** jeder der beiden weiteren Körper mit einem Magneten (6) versehen ist, dem ein AMR-Sensor (8, 9) zugeordnet ist, der zur Messung des Winkels des zugehörigen weiteren Körpers vorgesehen ist, und dass eine Auswerteschaltung (10) vorgesehen ist, die mit den beiden AMR-Sensoren (8, 9) gekoppelt ist, und die zur Auswertung und ggf. zur Umformung der gemessenen Winkel der beiden weiteren Körper vorgesehen ist.

4. Vorrichtung (1, 7) nach einem der Ansprüche 2 oder 3, **dadurch gekennzeichnet, dass** zur Ermittlung des Winkels des ersten Körpers ein Rechengerät (13) insbesondere ein programmierbarer Mikroprozessor, vorgesehen ist.

5. Vorrichtung (1, 7) nach Anspruch 4, **dadurch gekennzeichnet, dass** das Rechengerät (13) ein Startsignal (S) erzeugen kann, mit dem die gleichzeitige Messung der Winkel der beiden weiteren Körper (3), (4) durch die beiden AMR-Sensoren (8, 9) auslösbar ist.

6. Vorrichtung nach Anspruch 5, **dadurch gekennzeichnet, dass** durch das Startsignal die Winkel der beiden weiteren Körper mit einem gemeinsamen Zeitbezug, insbesondere zu einem gleichen Abtastzeitpunkt, gemessen werden.

7. Vorrichtung (1, 7) nach einem der vorhergehenden Ansprüche, **dadurch gekennzeichnet, dass** eine Leitung (17) vorgesehen ist, über die das Rechengerät (13) mit der Auswerteschaltung (10) verbunden ist, und auf der das Startsignal (S) der Auswerteschaltung (10) zuführbar ist.

8. Vorrichtung (1, 7) nach einem der vorhergehenden Ansprüche, **dadurch gekennzeichnet, dass** der erste Körper (2) mit einer Anzahl (n) von Zähnen versehen ist, und dass die beiden weiteren Körper mit davon abweichenden, unterschiedlichen Anzahlen (m, m+1) von Zähnen versehen sind.

9. Vorrichtung (1, 7) nach einem der vorhergehenden Ansprüche, **dadurch gekennzeichnet, dass** der erste Körper (2) mit einem Lenkrad eines Kraftfahrzeugs gekoppelt ist.

## Claims

1. Method for determining the angle of a first rotatable body which interacts with two further rotatable bodies, the angle between the two further bodies being measured and the angle of the first body being calculated therefrom, **characterized in that** the angle of the two further bodies (3), (4) is measured simultaneously, the angles of the two further bodies (3), (4) being measured with a common time reference, in particular at the same sampling time, and the measured angles of the two further bodies (3), (4) being stored using sample-and-hold elements (11), (12).

2. Device (1, 7) for determining the angle of a first rotatable body which interacts with two further rotatable bodies, it being possible to measure the angle between the two further bodies and calculate the angle of the first body therefrom, **characterized in that** means are provided for simultaneously measuring the angles between the two further bodies (3), (4) with a common time reference, in particular with the same sampling time and with storage means which comprise sample-and-hold elements (11), (12) for storing the measured angles between the two further bodies (3), (4).

3. Device (1, 7) according to Claim 2, **characterized in that** each of the two further bodies is provided with a magnet (6) to which an AMR sensor (8, 9), which is provided for measuring the angle of the associated further body, is assigned, and **in that** an evaluation circuit (10) is provided which is coupled to the two AMR sensors (8, 9) and which is provided for evaluating and, if appropriate, for converting the measured angles of the two further bodies.

4. Device (1, 7) according to one of Claims 2 or 3, **characterized in that** a computing unit (13), in particular a programmable microprocessor, is provided for determining the angle of the first body.

5. Device (1, 7) according to Claim 4, **characterized in that** the computing unit (13) can generate a starting signal (S) with which the simultaneous measurement of the angles between the two further bodies (3), (4) can be triggered by the two AMR sensors (8, 9).

6. Device according to Claim 5, **characterized in that** the angles of the two further bodies are measured with a common time reference, in particular at the same sampling time, by means of the starting signal.

7. Device (1, 7) according to one of the preceding claims, **characterized in that** a line (17) is provided by means of which the computing unit (13) is connected to the evaluation circuit (10), and on which the starting signal (S) can be fed to the evaluation circuit (10).

8. Device (1, 7) according to one of the preceding claims, **characterized in that** the first body (2) is provided with a number (n) of teeth, and **in that** the two further bodies are provided with numbers (m, m+1) of teeth which differ therefrom.

9. Device (1, 7) according to one of the preceding claims, **characterized in that** the first body (2) is coupled to a steering wheel of a motor vehicle.

## Revendications

1. Procédé pour déterminer l'angle d'un premier corps tournant coopérant avec deux autres corps tournants, selon lequel on mesure l'angle des deux autres corps pour en calculer celui du premier corps,
**caractérisé en ce que**
on mesure simultanément l'angle des deux autres corps (3, 4), cet angle des autres corps (3,4) étant mesuré par rapport à un même temps de référence, notamment un même instant de début de détection et
on mémorise les angles mesurés des deux autres corps (3, 4) en utilisant des éléments d'échantillonnage et de maintien (11, 12).

2. Dispositif (1, 7) pour déterminer l'angle d'un premier corps tournant coopérant avec deux autres corps tournants selon lequel l'angle des deux autres corps est mesurable et permet le calcul de l'angle du premier corps
**caractérisé par**
des moyens pour mesurer simultanément l'angle des deux autres corps (3, 4) avec un même temps de référence, notamment le même instant de début de détection et
des moyens de mise en mémoire comprenant des éléments d'échantillonnage et de maintien (11, 12) pour enregistrer en mémoire l'angle mesure des deux autres corps (3, 4).

3. Dispositif (1,7) selon la revendication 2,
**caractérisé en ce que**
chacun des deux autres corps a un aimant auquel est associé un capteur AMR (8,9) servant à mesurer l'angle de l'autre corps correspondant, et un circuit d'exploitation (10) est couplé aux deux capteurs AMR (8, 9) pour exploiter l'angle mesuré des deux autres corps, et le cas échéant transformé l'angle mesuré.

4. Dispositif (1,7) selon l'une des revendications 2 ou 3
**caractérisé par**
un dispositif de calcul (13) notamment un microprocesseur programmable pour déterminer l'angle du premier corps.

5. Dispositif selon la revendication 4,
**caractérisé en ce que**
le dispositif de calcul (13) génère un signal de départ (S) pour déclencher dans les deux capteurs AMR (8,9), la mesure simultanée de l'angle des deux autres corps (3,4).

6. Dispositif selon la revendication 5,
**caractérisé en ce que**
le signal de départ permet de mesurer l'angle des deux autres corps avec le même temps de référence notamment le même instant de début de détection.

7. Dispositif (1, 7) selon l'une des revendications précédentes,
**caractérisé par**
une ligne (17) reliant le dispositif de calcul (13) au circuit d'exploitation (10) et fournissant le signal de départ (S) au circuit d'exploitation (10).

8. Dispositif (1, 7) selon l'une quelconque des revendications précédentes
caractérisé en que
le premier corps (22) comporte un certain nombre (n) de dents et les deux autres corps ont un autre nombre de dents différent (m, m+1).

9. Dispositif (1, 7) selon l'une quelconque des revendications,
**caractérisé en ce que**
le premier corps (2) est couplé au volant de direction d'un véhicule automobile.
